# EUROPÄISCHE PATENTSCHRIFT

(11) **EP 2 062 400 B1**
(45) Veröffentlichungstag und Bekanntmachung des Hinweises auf die Patenterteilung: **14.11.2012**
(21) Anmeldenummer: 07802090.6
(22) Anmeldetag: 03.09.2007
(51) Int. Cl.: H04L 12/56, H04L 29/06

(54) **VERFAHREN UND SYSTEM ZUR ADRESSIERUNG UND ZUM ROUTING BEI VERSCHLÜSSELTEN KOMMUNIKATIONSBEZIEHUNGEN**
METHOD AND SYSTEM FOR ADDRESSING AND ROUTING IN ENCRYPTED COMMUNICATIONS LINKS
PROCÉDÉ ET SYSTÈME D'ADRESSAGE ET DE ROUTAGE AVEC DES RELATIONS DE COMMUNICATION CRYPTÉES

(30) Priorität: 14.09.2006 DE 102006043156; 12.01.2007 DE 102007001831
(43) Veröffentlichungstag der Anmeldung: 27.05.2009
(73) Patentinhaber: Rohde & Schwarz GmbH & Co. KG, 81671 München (DE)
(72) Erfinder: GRUBER, Ingo, 80634 München (DE); LANGGUTH, Torsten, 82008 Unterhaching (DE); SCHOBER, Henrik, 85457 Wörth (DE)
(74) Vertreter: Körfer, Thomas
(86) Internationale Anmeldenummer: PCT/EP2007/007675
(87) Internationale Veröffentlichungsnummer: WO 2008/031515

(56) Entgegenhaltungen:
- EP-A- 1 591 862
- US-A1- 2005 091 482
- US-A1- 2005 157 730

## Beschreibung

Zukünftige Funkgeräte werden deutlich flexiblere Anwendungsmöglichkeiten besitzen als bisherige Funkgeräte. Dies wird durch das Konzept der "Software Defined Radios" (SDR) erreicht. SDRs bieten die Möglichkeit, Funkverfahren (Wellenformen) als Software zu laden und die Konfiguration der Wellenformen und des Funkgerätes flexibel über eine Softwaresteuerung zu ändern. Moderne Funkübertragungsverfahren können dabei auch die Übertragung von Datenpaketen nach dem Internet Protokoll (IP) Standard unterstützen. Dies ermöglicht die Nutzung von Standard-IP-Applikationen und bekannten Konzepten, die auch für das Internet genutzt werden.

Je nach Sicherheitsanforderungen müssen sensitive Informationen verschlüsselt übertragen werden können (communication security, COMSEC). Dies kann z. B. durch den Einsatz des Standards IPsec erreicht werden, der in S. Kent, K. Seo, "Security Architecture for the Internet Protocol", IETF RFC 4301, December 2005, beschrieben ist.

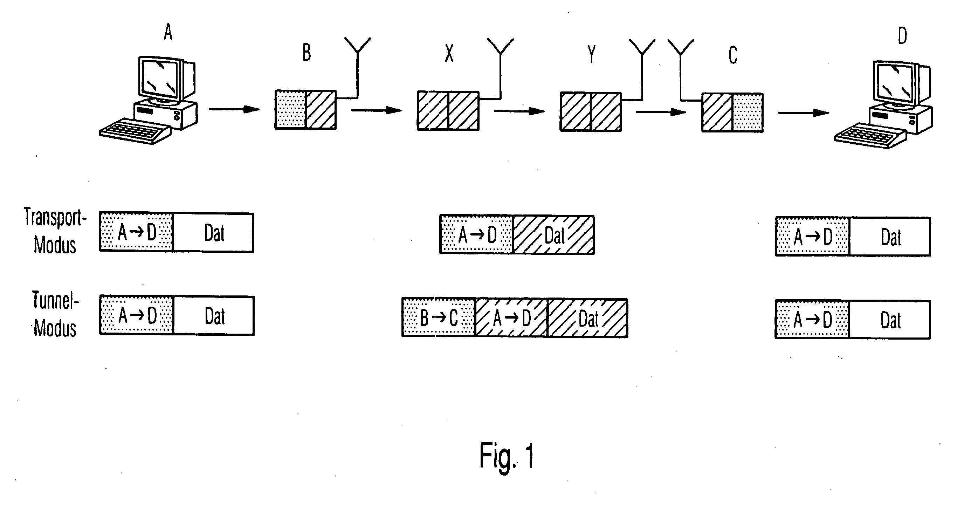

Dieser Standard ermöglicht zwei unterschiedliche Übertragungsverfahren für die verschlüsselten Informationen: Den Transportmodus und den Tunnelmodus, wie in Fig. 1 dargestellt. Im Transportmodus werden nur die Nutzdaten des IP-Paketes verschlüsselt, während der IP-Header (u.a. mit den IP-Adressen von Sender und Empfänger) nicht modifiziert wird. Im Tunnelmodus wird das gesamte ursprüngliche IP-Paket verschlüsselt und ein neuer Header hinzugefügt. Der neue Header enthält als Quelladresse die Adresse des Verschlüsselungsgerätes und nicht des originalen Quellknotens. Genauso ist die Zieladresse im neuen Header die des Entschlüsselungsgerätes und nicht die des wirklichen Empfangsgerätes. Damit kann wirkungsvoll verhindert werden, dass ein potentieller Angreifer anhand der Quell- und Zieladresse eine stattfindende Kommunikation zwischen den Kommunikationspartnern detektieren kann. Der potentielle Angreifer sieht, dass lediglich Daten zwischen den beiden Verschlüsselungsgeräten ausgetauscht werden. Die eigentlichen Endteilnehmer des Datenverkehrs bleiben ihm verborgen.

Für die sicherheitsrelevante und vertrauliche Kommunikation wird der Tunnelmodus eingesetzt. Durch den Tunnelmodus entstehen zwei vollständig voneinander getrennte Netzebenen. Die rote Ebene ist die vertrauliche Ebene. Auf ein rotes Netz haben nur autorisierte Personen Zugriff. Dagegen stellt das schwarze Netz ein öffentlich zugängliches Netz dar, und ist damit als unsicher einzustufen. Vertrauliche Informationen aus einem roten Netz dürfen nur verschlüsselt über ein schwarzes Netz übertragen werden. Durch die strikte Nutzung des Tunnelmodus besitzen diese Netze zunächst keine Informationen voneinander. Der Tunnelmodus aus Sicht der roten Netzwerkebene stellt einen transparenten Tunnel zu einem anderen roten Netz dar und verbirgt die dahinter existierende schwarze Netzebene. Fig. 1 verdeutlicht diesen Sachverhalt. Die Teilnehmer A und D haben keine Kenntnis über möglicherweise existierende zusätzliche Netzteilnehmer X und Y, die an der Weiterleitung der Daten zwischen B und C beteiligt sind.

US 2005/091482 Al offenbart ein Routingverfahren, derart, dass der Netzwerkbetreiber ein Netz als physikalisches oder als virtuelles Netz konfigurieren kann. Im ersten Fall wird das Routing durch das IP Protokoll durchgeführt; im zweiten Fall basiert das Routing auf IPSec und wird mit verschlüsselten Adressen im Tunnelling-Mode durchgeführt. Es besteht die Möglichkeit, das Netz aus US 2005/091482 Al an ein anderes Netz mit einem anderen Routingprotokoll über ein Gateway zu koppeln.

Diese vollständige Trennung wirkt sich jedoch auch nachteilig auf die gesamte Netzwerkarchitektur aus. In den Verschlüsselungsgeräten müssen Informationen verfügbar sein, welche roten Netze an ein schwarzes Entschlüsselungsgerät angeschlossen sind. Dies ist notwendig, damit in den neu generierten IP-Headern beim Tunnelmodus die passende schwarze Zieladresse eingetragen werden kann.

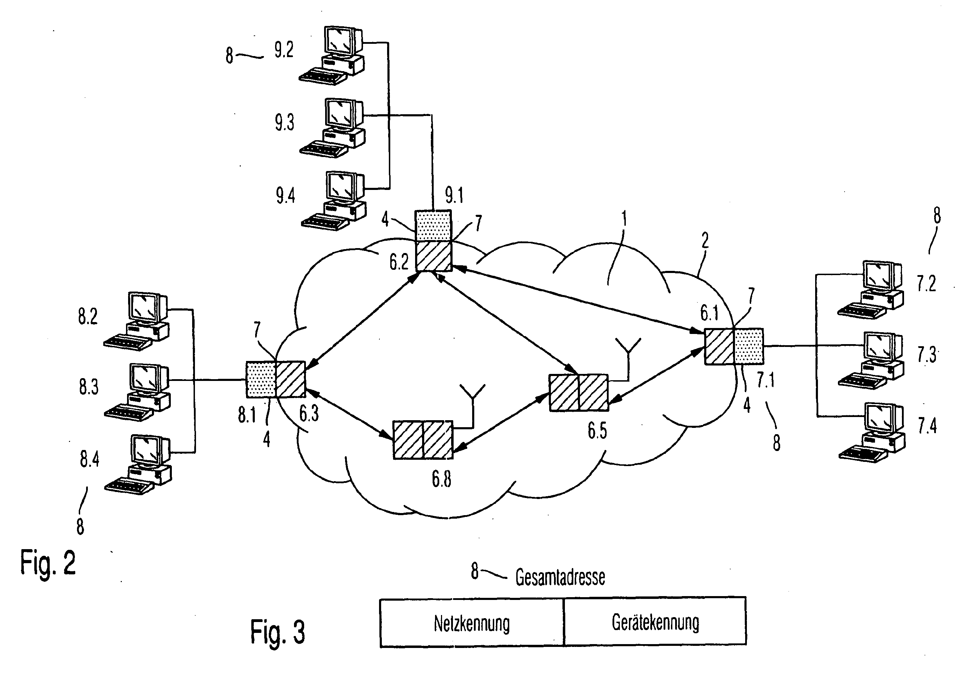

In einem Kommunikationsnetz sind mehrere Netzteilnehmer zusammengefasst. Wie Fig. 2 zeigt, können mehrere Endgeräte das gleiche Verschlüsselungsgerät nutzen. Jedes Verschlüsselungsgerät besitzt sowohl eine vertrauliche rote als auch eine öffentliche schwarze Adresse. Die Endgeräte eines vertraulichen Subnetzes versenden Daten unverschlüsselt an das Verschlüsselungsgerät. Dieses verschlüsselt die Daten im Tunnelmodus und leitet die Daten über eine unsichere Kommunikationsverbindung an das empfangende Verschlüsselungsgerät weiter. Dort werden sie entschlüsselt und an den Empfänger weitergeleitet.

Die schwarzen Adressen der Verschlüsselungsgeräte eines Netzes werden automatisch durch ein Protokoll mit Adressautokonfiguration bestimmt. Für das Routing in der schwarzen Netzhierarchie wird ein herkömmliches Routingprotokoll genutzt. Der Austausch von Signalisierungsinformationen sorgt für die Konsistenz der Topologie innerhalb des schwarzen Netzes. Für eine Verbindung von Endgeräten müssen jedoch auch Daten zwischen dem roten Netz und dem schwarzen Netz ausgetauscht werden können. Dies wiederum setzt die Kenntnis des Adressmappings zwischen schwarzen und roten Adressen des Verschlüsselungsgerätes voraus. Der genutzte IPsec-Tunnelmodus verhindert jedoch eine direkte Abbildung der bekannten schwarzen Adressen auf die roten Adressen.

Dadurch ist kein gemeinsames und gleichzeitiges Routing in beiden Netzen mehr möglich. Um die Routinginformationen der roten Netze zwischen zwei Verschlüsselungsgeräten automatisch auszutauschen, kann beispielsweise das IPSec-Discovery-Protokoll verwendet werden.

Um die erfindungsgemäß vorgeschlagene Lösung und die Probleme der bisherigen Lösung des Standes der Technik besser nachzuvollziehen, wird im Folgenden eine kurze Einführung in die Adressierung von IP-Netzen gegeben.

Um Daten zwischen zwei Teilnehmern im globalen Internet versenden zu können, ist eine eindeutige Identifizierung der Endteilnehmer notwendig. Die Weiterleitungsknoten können dann anhand der Zieladresse den optimalen Weg zwischen Sender und Empfänger bestimmen, ohne dass der Sender den genauen Weg kennen muss. Um einen Teilnehmer eindeutig identifizieren zu können, besteht eine Adresse aus einer Netzkennung und einer Gerätekennung. Die Netzkennung identifiziert das Netz, in dem sich der Teilnehmer befindet, während die Gerätekennung den individuellen Teilnehmer in einem Netz bestimmt. Die Gesamtadresse entsteht dabei durch Aneinanderhängen der beiden Adressteile, was in Fig. 3 veranschaulicht ist.

Alle Geräte innerhalb eines Netzes nutzen die gleiche Netzkennung, während die Gerätekennung jeweils unterschiedlich ist. Deshalb ist es notwendig, dass ein Endteilnehmer seine Netzkennung ändert, sobald er einen Wechsel des Netzes vollzieht. Dies ist notwendig, damit nicht jedem Weiterleitungsknoten im Internet die neue Anbindung des Endgerätes signalisiert werden muss, sondern anhand der Netzkennung direkt auf das Netz geschlossen werden kann. Die Netzkennung eines Endgerätes wird für das Routing innerhalb des globalen Netzes benötigt.

Die Gerätekennung sollte individuell und eindeutig für alle am globalen Netz teilnehmenden Geräte sein. Sie basiert beispielsweise auf der MAC-Adresse der Netzwerkkarte, kann aber auch aus einem anderen Parameter generiert werden. Damit lässt sich ein Gerät anhand der Gerätekennung bereits eindeutig identifizieren. Sie ist konstant und ändert sich nicht über die Zeit.

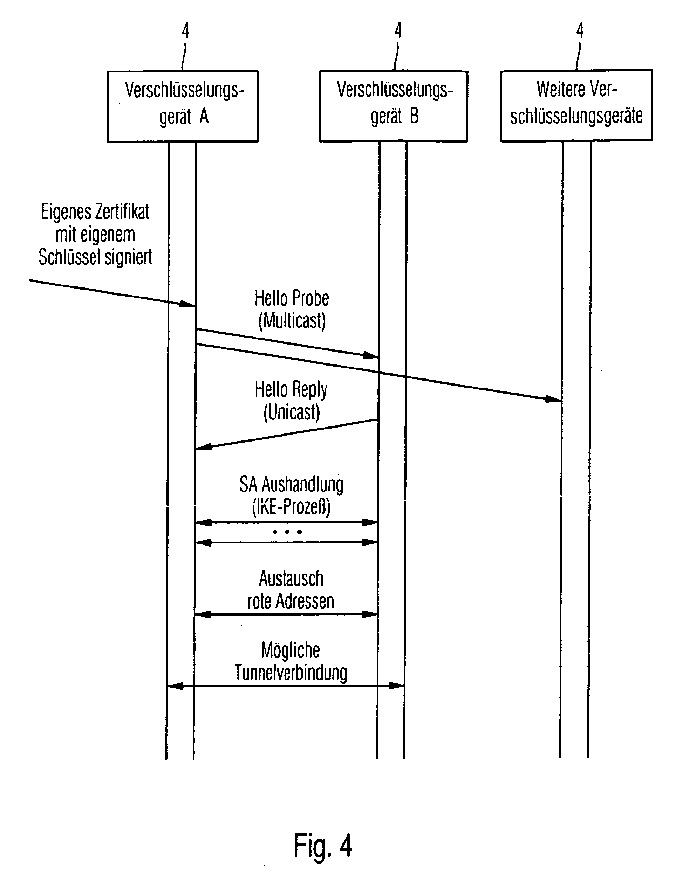

Die Verschlüsselungsgeräte haben durch das Routingprotokoll des schwarzen Netzes nur das Wissen über die schwarzen Adressen aller am Netz beteiligter Teilnehmer. Um eine sichere Verbindung zwischen Endteilnehmern, die sich jeweils in einem roten Netz befinden, aufbauen zu können, muss zuerst die eindeutige und vertrauliche Zuordnung zwischen der schwarzen Adresse des Entschlüsselungsgerätes und der an ihn angeschlossenen roten Netze erfolgen. Diese Zuordnung der roten und schwarzen Adressen kann mit Hilfe des IPsec-Discovery-Protokolls ermittelt werden. Das Ablaufdiagramm des Protokolls ist in Fig. 4 dargestellt und beschreibt die Authentifizierung mit Hilfe von Zertifikaten. Jedoch ist diese auch mit Hilfe von vorher ausgetauschten Schlüsseln (pre shared keys, PSK) möglich, wird hier jedoch nicht näher beschrieben.

Um das vertrauliche Mapping zwischen schwarzer und roter Adresse eines Verschlüsselungsgerätes zu erhalten, sendet das Verschlüsselungsgerät A eine "Hello Probe"-Nachricht an eine speziell dafür vorgesehene Multicast-Adresse. Damit erhalten diese Nachricht alle am Netz beteiligten Teilnehmer. Die Nachricht enthält das Sicherheitszertifikat von Verschlüsselungsgerät A mit einer gültigen Unterschrift der Zertifizierungsstelle. Zusätzlich enthält das Zertifikat noch den Schlüssel des Verschlüsselungsgeräts A. Nach Erhalt der Nachricht, prüft Verschlüsselungsgerät B die Echtheit des Zertifikats mit Hilfe des Root-Zertifikats der Zertifizierungsstelle und authentisiert es mit Hilfe der Signatur bzw. des Schlüssels von Verschlüsselungsgerät A. Nach erfolgreicher Authentisierung sendet Verschlüsselungsgerät B eine "Hello Reply"-Nachricht an Verschlüsselungsgerät A zurück. Diese enthält die gleichen Informationen von Verschlüsselungsgerät B. Nach Überprüfung dieser Informationen durch Verschlüsselungsgerät A startet die Aushandlung der Security Association (SA), in der unter anderem der verwendete Kryptoalgorithmus und Gültigkeitsdauern für die Authentifizierung und den Schlüssel festgelegt sind. Da den Kommunikationspartnern bisher die gegenseitigen roten Adressen nicht bekannt sind, kann die SA-Aushandlung nicht im IPsec-Tunnelmodus durchgeführt werden, sondern muss im IPsec-Transportmodus durchgeführt werden. Dabei wird der IP-Header der Datenpakete zwischen den Verschlüsselungsgeräten unverschlüsselt übertragen, und nur der eigentliche Inhalt des Datenpakets verschlüsselt. Nach erfolgreicher Aushandlung der SA können die Verschlüsselungsgeräte ihre roten Adressen verschlüsselt im IPsec-Transportmodus übertragen. Erst danach ist der Aufbau einer Tunnelverbindung zwischen den Verschlüsselungsgeräten möglich.

Um mit einem speziellen Teilnehmer eines anderen roten Netzes kommunizieren zu können, muss zuerst ein abhörsicherer Tunnel zwischen diesen beiden roten Netzen aufgebaut werden. Dies erfordert das Wissen über das verantwortliche Verschlüsselungsgerät für das jeweilige Endgerät und die daran angeschlossenen roten Netze. Da das IPsec-Discovery-Protokolls nur einen sequentiellen Austausch der Mapping-Informationen mit jedem einzelnen Verschlüsselungsgerät unterstützt, müssen zwischen allen Verschlüsselungsgeräten paarweise Tunnel aufgebaut werden, um die vollständige Kenntnis der Adresszuordnungen aller Verschlüsselungsgeräte im Netz zu erhalten. Damit muss für den Aufbau einer Verbindung zu einem bisher unbekannten roten Teilnehmer im schlimmsten Fall das IPsec-Discovery-Protokoll mit allen möglichen Verschlüsselungsgeräten genutzt werden. Der Aufwand für das Verschlüsselungsgerät der Quelle steigt somit linear mit der Anzahl an Verschlüsselungsgeräten N: Aufwand ∼O(*N*). Für die Eingliederung neuer Verschlüsselungsgeräte und ihrer angeschlossenen Netze in das Gesamtnetz muss somit mit jedem anderen Verschlüsselungsgerät das IPsec-Discovery-Protokoll ausgeführt werden. Dadurch steigt der potentielle Signalisierungsaufwand des Gesamtnetzes mit O(*N*²) an.

Zusätzlich zu dem Aufwand, um die roten Endgeräte im eigenen Netz zu identifizieren, muss das IPsec-Discovery-Protokoll ebenfalls bei einem Wechsel des Netzes ausgeführt werden. Wie beschrieben, wird bei einem Wechsel des Netzes die Netzkennung geändert, wodurch auch die Gesamtadresse des Verschlüsselungsgerätes verändert wird. Damit sind die an das Verschlüsselungsgerät angebundenen Endgeräte im neuen Netz nicht mehr identifizierbar. Deshalb muss wieder mit jedem weiteren Verschlüsselungsgerät des neuen Netzes das IPsec-Discovery-Protokoll ausgeführt werden, damit gegenseitig alle die jeweiligen geheimen Adresszuordnungen kennen und damit ebenfalls die roten Netze, an die die Endgeräte angeschlossenen sind.

Dieses Verhalten ist besonders kritisch in Funknetzen. In einer Umgebung mit beschränkten Funkressourcen ist ein erhöhter Signalisierungsaufwand durch das IPsec-Discovery-Protokoll gerade in einer hochdynamischen Umgebund, in der sich die Topologie häufig ändert, besonders kritisch. Zusätzlich kann speziell in Funkumgebungen ein häufiger Netzwechsel von Einzelgeräten, d. h. von Verschlüsselungsgeräten zusammen mit Endgeräten, auftreten. Die Anzahl der dabei notwendigen Durchläufe des IPsec-Discovery-Protokolls kann die Funkressourcen noch weiter belasten, wodurch eine sinnvolle Kommunikation von Anwendungen im Tunnel-Verschlüsselungsmodus in Funkumgebungen nicht mehr möglich sein kann, da der Signalisierungsdatenverkehr stark zugenommen hat.

Der Erfindung liegt daher die Aufgabe zugrunde, ein Verfahren und ein System zur sicheren Kommunikation zu schaffen, das mit geringem Signalisierungsaufwand eine hohe Datensicherheit und Verfügbarkeit des Systems ermöglicht.

Die Aufgabe wird bezüglich des Verfahrens durch die Merkmale des Anspruchs 1 und bezüglich des Systems durch die Merkmale des Anspruchs 15 gelöst. Die Unteransprüche enthalten vorteilhafte Weiterbildungen des erfindungsgemäßen Verfahrens bzw. des erfindungsgemäßen Systems.

Durch die Erfindung wird ein effizientes Verfahren zur Gewinnung aktueller Routinginformationen auf Basis von eindeutigen Zuordnungen zwischen roten Netzadressen und schwarzen Gerätekennungen vorgeschlagen. Diese Zuordnungen können z. B. durch eindeutige Funktionen oder über eine Look-up-Tabelle beschrieben werden. Dieses Verfahren vermeidet den langwierigen und ressourcenbelastenden Austausch von Signalisierungs- und Routingnachrichten zur Gewinnung der aktuellen roten Netztopologie und den entsprechenden Routinginformationen. Diese Informationen können mit Hilfe der eindeutigen Zuordnung von schwarzen Gerätekennungen zu roten Netzadressen direkt aus der bekannten schwarzen Netztopologie abgeleitet werden. Ist ein Gerät mit seiner schwarzen Gerätekennung im schwarzen Netz bekannt, kann über die Zuordnung sofort auf das an diesen Teilnehmer angeschlossene rote Netz geschlossen werden.

Das Konzept der Look-up-Tabellen nutzt eine zunächst im Vorfeld konfigurierte und im Verschlüsselungsgerät abgelegte Tabelle für die Zuordnung zwischen schwarzen Gerätekennungen und roten Netzen. Durch die Nutzung des erfindungsgemäßen Verfahrens kann auf die Nutzung des IPsec-Discovery-Protokolls verzichtet werden und der notwendige.Signalisierungsverkehr zum Austausch von Routinginformationen zwischen den roten Netzen der Teilnehmer vermieden werden. Insbesondere in Funkumgebungen mit begrenzten Funkressourcen kann durch den Verzicht auf das IPsec-Discovery-Protokoll die Nutzbarkeit des Funknetzes deutlich erhöht werden.

Ein Ausführungsbeispiel der Erfindung wird nachfolgend unter Bezugnahme auf die Zeichnung beschrieben. In der Zeichnung zeigen:
- Fig. 1: den Transport- und Tunnelmodus bei IPsec;
- Fig. 2: die Topologie eines Netzes bei Nutzung des IPsec-Tunnelmodus;
- Fig. 3: das Adressierungsschema in IP-Netzen;
- Fig. 4: das Ablaufdiagramm des IPsec-Discovery-Protokolls;
- Fig. 5: die Look-up-Tabelle im Verschlüsselungsgerät für das Mapping zwischen schwarzen und roten Adressen;
- Fig. 6: den internen Aufbau des Verschlüsselungsgerätes mit der Look-up-Tabelle;
- Fig. 7: den Tunnelmodus innerhalb eines vertraulichen Netzes und
- Fig. 8: ein Ausführungsbeispiel des erfindungsgemäßen Systems für die Adressierung und für das Routing in verschlüsselten Kommunikationsbeziehungen.

Durch die Trennung der vertraulichen roten Netzebene (im Folgenden kurz als rote Netzebene bezeichnet) von der schwarzen öffentlichen Netzebene (im Folgenden kurz als schwarze Netzebene bezeichnet) durch das Verschlüsselungsgerät 4 muss zunächst in beiden Netzebenen unabhängig voneinander die Netztopologie in den Routingtabellen 17 der entsprechenden Router abgebildet werden. Da die schwarze Routingtabelle 17 grundsätzlich alle Informationen über die Teilnehmer des schwarzen, öffentlichen Netzes 2 enthält, können durch Nutzung dieser Informationen auch auf der roten, vertraulichen Seite Signalisierungsnachrichten verringert werden. Dies kann durch Einführung einer eindeutigen Zuordnung erreicht werden, die eine Beziehung zwischen schwarzen, öffentlichen Gerätekennung und roten, vertraulichen Netzadressen 8 beschreibt. Diese Abbildung beschreibt, welche roten Netze über ein Verschlüsselungsgerät an die schwarze Seite mit einer bestimmten schwarzen Gerätekennung angeschlossen sind. Die Kenntnis über die Erreichbarkeit von Geräten mit einer individuellen schwarzen Gerätekennung ermöglicht somit Aussagen über die daran angeschlossenen roten Netze.

Dieses Konzept kann beispielsweise durch vorkonfigurierte Tabellen in allen beteiligten Verschlüsselungsgeräten 4 oder durch eine eindeutige Abbildung, z. B. eine mathematische Funktion, realisiert werden. Als Grundlage für die Abbildungsvorschrift wird eine eindeutige schwarze Kennung eines Gerätes verwendet. Beispiele für solche Gerätekennungen sind MAC-Adressen oder Host-IDs entsprechend des IPv6-Protokolls.

Bei den schwarzen öffentlichen Adressen ergibt sich ein abweichendes Bild. Innerhalb eines schwarzen, öffentlichen Netzes 2 müssen alle Teilnehmer die gleiche Netzkennung verwenden. Durch einen Wechsel des Netzes ändert sich diese Netzkennung. Damit eignet sich die schwarze, öffentliche Netzkennung nicht für eine Identifizierung eines Verschlüsselungsgerätes 4. Jedoch ermöglicht eine eindeutige Gerätekennung, z.B. die IPv6-Interface-ID auf Basis der 48bit-MAC-Adresse, eine Identifikation des Verschlüsselungsgerätes 4 in einer beliebigen Netzumgebung.

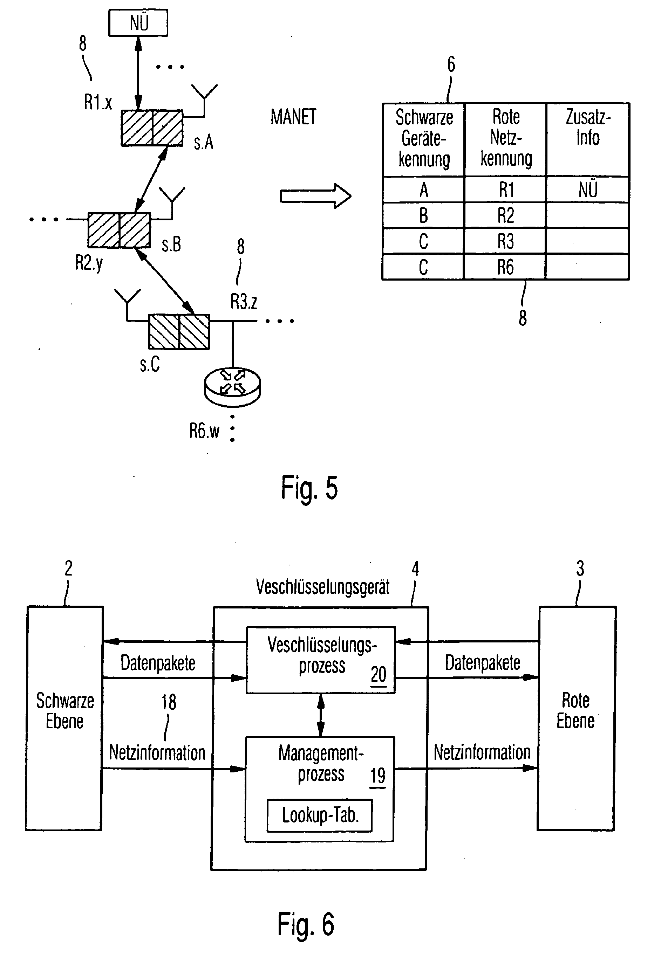

Damit kann mit Hilfe der schwarzen Gerätekennung das angeschlossene Netz auf der roten Seite 3 identifiziert werden. Fig. 5 stellt den Zusammenhang zwischen den schwarzen -nicht vertraulichen - und roten - vertraulichen - Adressteilen 8 an einem Beispiel dar. Wegen der Sicherheitsanforderungen an das Verschlüsselungsgerät 4 dürfen die Informationen der Look-up-Tabelle 6 bzw. der Routingtabelle 17 niemals im schwarzen, öffentlichen Netz 2 verteilt werden, sondern dürfen nur innerhalb des Verschlüsselungsgerätes 4 ausgewertet werden.

Dadurch müssen die Informationen für den Aufbau der Tabelle in jedem Verschlüsselungsgerätes 4 vor der Inbetriebnahme vorkonfiguriert werden. Durch eine Mobilität der Verschlüsselungsgeräte 4 zusammen mit ihren angebundenen Netzen, z.B. in einem Funknetz, und die Einbindung in unterschiedliche regionale Netze kann die Anzahl an Tabelleneinträgen groß werden. Deshalb muss im Verschlüsselungsgerät 4 ausreichend Speicher vorgesehen werden, um die Tabellen aufnehmen zu können.

Mit einem zusätzlichen Eintrag in der Look-up-Tabelle 6 können weitere an ein Verschlüsselungsgerät 4 angeschlossen rote, vertrauliche Netze 3, gekennzeichnet und bekannt gemacht werden. Dies ist in Fig. 5 z. B. das Netz w an Router R6.

Weitere Netze können normalerweise über Netzübergange NÜ innerhalb des eigenen Netzes erreicht werden. Die Adressen der Netzübergange werden dabei mit Hilfe eines Protokolls im Netz bekannt gegeben. Damit kann jeder Teilnehmer direkt die Netzübergänge anhand deren schwarzer, nicht vertraulicher Adressen erkennen. Falls ein Netzübergang jedoch innerhalb des roten, vertraulichen Netzes 3 eines Verschlüsselungsgerätes 4 positioniert ist, ist eine einfache Signalisierung der Adresse nicht möglich. Eine zusätzliche Information innerhalb der Look-up-Tabelle 6 über das verantwortliche Verschlüsselungsgerät 4 des Netzübergangs umgeht dieses Problem. Eine zusätzliche Signalisierung für die Detektion des Netzübergangs wird damit überflüssig. Der Aufbau eines Tunnels zu diesen wichtigen Netzteilnehmern ist somit problemlos möglich.

Neben der Vermeidung von hohem Signalisierungsverkehr innerhalb des Netzes ermöglicht das Konzept zur Nutzung von Look-up-Tabellen 6 auch eine Aufrechterhaltung einer zeitnahen Konsistenz des schwarzen, öffentlichen und des roten, vertraulichen Netzes 2, 3. Sobald das schwarze Routingprotokoll die Nicht-Erreichbarkeit eines Teilnehmers im schwarzen Netz 2 erkennt, kann dies dem Verschlüsselungsgerät 4 signalisiert werden. Dies wiederum kann mit Hilfe der Tabelle auf die rote, vertrauliche Adresse 8 des nicht-erreichbaren Teilnehmers schließen. Damit kann direkt die Routingtabelle 17 der roten Endgeräte aktualisiert werden. Somit können Datenpakete direkt im roten Router zurückgewiesen werden. Auf einen Austausch von Routinginformationen zwischen den roten, an die unterschiedlichen Verschlüsselungsgeräte angebundenen Netzen kann somit vollständig verzichtet werden. Das rote, vertrauliche Netz 3 erkennt automatisch und nach kurzer Zeit die grundlegende Topologie des schwarzen öffentlichen Netzes 2.

Nachdem der prinzipielle Aufbau der Look-up-Tabelle 6 beschrieben wurde, soll im Folgenden der grobe Ablauf der Datenverarbeitung und der Informationsgewinnung mit Hilfe der Look-up-Tabelle 6 verdeutlicht werden.

Fig. 6 zeigt den schematischen Aufbau des Verschlüsselungsgerätes 4. Die schwarze, öffentliche Seite 2 des Verschlüsselungsgerätes 4 erhält kontinuierlich Routinginformationen, d. h. Netzinformationen 18, aus der schwarzen, öffentlichen Ebene 2 des Netzes. Mit Hilfe der ausgetauschten schwarzen, öffentlichen Gerätekennungen der anderen Verschlüsselungsgeräte 4 kann der Managementprozess 19 in der Look-up-Tabelle die jeweils angebundenen roten, vertraulichen Netze 3 identifizieren. Diese Netzinformationen 18 leitet der Managementprozess 19 an die rote, vertrauliche Ebene 3 weiter. Damit erhält das Verschlüsselungsgerät 4 Informationen über die Erreichbarkeit anderer angeschlossener roter Netze 3.

Die roten, vertraulichen Router 17 sind dadurch sofort in der Lage, alle potentiell erreichbaren roten Netze 3 zu erkennen. Die Topologie der schwarzen, öffentlichen Ebene 2 wird zeitnah auf die Topologie des roten Netzes 3 abgebildet. Dadurch kann einerseits viel Signalisierungsaufwand eingespart werden. Zum anderen ist eine Nicht-Erreichbarkeit eines speziellen Verschlüsselungsgerätes und seiner angebundenen Endgeräte sofort zu erkennen, und gegebenenfalls geeignet darauf zu reagieren. Ein Verschlüsselungsprozess 20 innerhalb des Verschlüsselungsgeräts sorgt dafür, dass die Datenpakete zur roten, vertraulichen Ebene 3 hin entschlüsselt und zur schwarzen Ebene 2 hin verschlüsselt werden.

Der zweite Vorteil dieses Verfahrens ergibt sich bei dem Verschlüsseln von roten, vertraulichen Daten aus der roten, vertraulichen Ebene. Der Verschlüsselungsprozess 20 kann mit Hilfe der Look-up-Tabelle 6 sofort auf das zuständige Entschlüsselungsgerät des Zielendgerätes schließen. Ein aufwändiges Durchlaufen des IPsec-Discovery-Protokolls kann entfallen. Sofern das Entschlüsselungsgerät in der Look-up-Tabelle 6 verzeichnet ist, und an das Netz angebunden, kann der Datenstrom praktisch ohne Verzögerung verschlüsselt und weiter geleitet werden.

Um die Größe der Look-up-Tabellen 6 zu minimieren, können die an das Verschlüsselungsgerät 4 angeschlossenen roten, vertraulichen Netze 3 eine hierarchische Adressierung nutzen. Dies bedeutet, dass die Adressen aller Endgeräte aus dem gleichen Adressbereich stammen, auch wenn zusätzliche Router die Einzelnetze trennen. Dadurch kann vermieden werden, dass mehrere Tabellen-Einträge für ein Verschlüsselungsgerät, wie in Fig. 5 dargestellt, benötigt werden. Durch die hierarchische Adressierung können alle angeschlossen Endgeräte eines Verschlüsselungsgerätes 4 unter einem Adresseintrag 8 zusammengefasst und in die Look-up-Tabelle 6 eingetragen werden.

Zusätzlich ist noch ein periodischer Austausch der Look-up-Tabellen 6 zwischen Verschlüsselungsgeräten 4 möglich. Dazu muss ein Verschlüsselungsgerät 4 mit einem anderen Verschlüsselungsgerät 4 einen abhörsicheren Tunnel aufbauen. Über diesen kann dann die Tabelle 6 abgeglichen werden. Dies hat den Vorteil, dass Änderungen an der Konfiguration der Tabelle 6 noch während der Laufzeit der Verschlüsselungsgeräte 4 vorgenommen werden können. Damit kann z. B. das Verschlüsselungsgerät 4 am Gateway 21 zusätzliche rote, vertrauliche Netzadressen, im Netz verteilen. Außerdem kann der vor Inbetriebnahme notwendige Konfigurationsaufwand minimiert werden, weil die Informationen der Look-up-Tabelle 6 auch noch während des Betriebes zugänglich gemacht werden können.

Die notwendige Signalisierung beim Ablauf des IPsec-Discovery-Protokolls ist signifikant. Speziell in Funkumgebungen mit begrenzten Datenraten mindert dies die zur Verfügung stehende Übertragungskapazität zusätzlich. Durch den Einsatz vorkonfigurierter Look-up-Tabellen 6 in den Verschlüsselungsgeräten 4 kann auf den Einsatz des IPsec-Discovery-Protokolls vollständig verzichtet werden. Die angebunden roten, vertraulichen Netze 3 können nach kurzer Zeit aus der Topologie des schwarzen, nicht vertraulichen Netzes 2 mit Hilfe der Look-up-Tabelle 6 abgeleitet werden. Dies vermindert zusätzlich die Verschwendung von Netzressourcen, weil die Nicht-Erreichbarkeit von Entschlüsselungsgeräten und daran angeschlossener roter Netze bereits im Sendegerät oder im Verschlüsselungsgerät 4 erkannt wird.

Wird weiterhin eine hierarchische Adressierung der roten, vertraulichen Netze 10 verwendet, können die Größen der notwendigen Look-up-Tabellen 6 weiter reduziert werden. Mit dem Austausch der Tabellen 6 zwischen einzelnen Verschlüsselungsgeräten 4 ist zusätzlich noch ein Abgleich während des Betriebes möglich. Damit kann der Konfigurationsaufwand vor Inbetriebnahme deutlich reduziert werden, weil nicht alle Einträge vorkonfiguriert sein müssen.

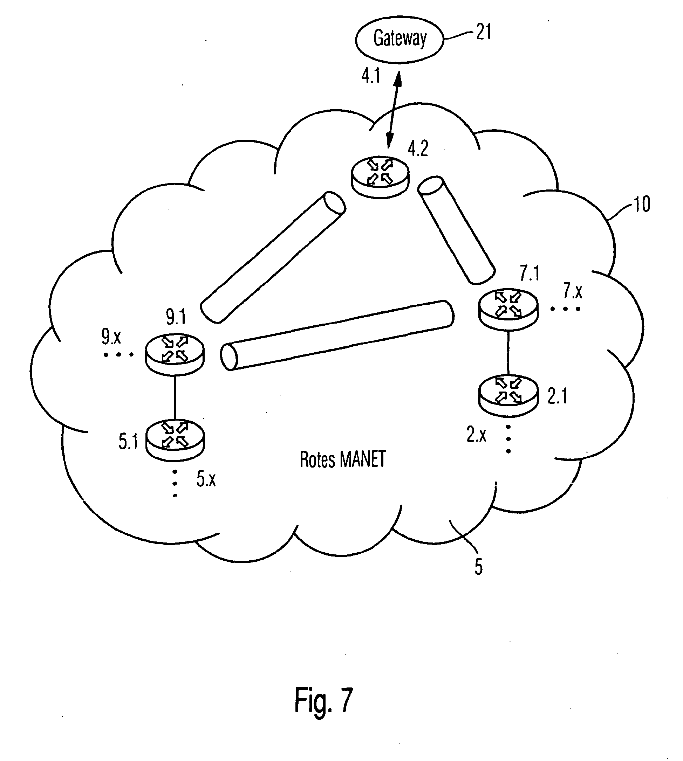

Fig. 7 zeigt den Tunnelmodus zwischen zwei vertraulichen roten Netzen 3, wobei das erfindungsgemäße Verfahren zur Adressierung und zum Routing bei verschlüsselten Kommunikationsbeziehungen 1 zum Tragen kommt. Die Kommunikationsbeziehungen bzw. die Verbindungen zwischen zwei Endteilnehmern erstrecken sich auf zwei unterschiedliche, von einander getrennte Netzebenen 2, 3, wobei sich auch die zu den Netzebenen 2, 3 zugehörigen Routingebenen voneinander unterscheiden. Die Abgrenzung dieser beiden Netzebenen 2, 3 mit ihren Routingebenen erfolgt über ein Verschlüsselungsgerät 4, das sowohl an die erste Netzebene 2, die ein öffentlich zugängliches und unsicheres, schwarzes Netz ist, als auch an die zweite Netzebene 3, die ein nicht-öffentlich zugängliches, rotes Netz ist, angebunden ist.

In den zwei Routingebenen wird jeweils eine aktuelle Netztopologie ermittelt, wobei die Ermittlung der Netztopologie der einen Netzebene 2, 3 unabhängig von der Ermittlung der Netztopologie der zweiten Netzebene 3, 2, die für nach außen abgeschirmte vertrauliche Kommunikation angewendet wird, erfolgt und in den entsprechenden Routingtabellen 17 abgespeichert wird. Dabei wird eine Schnittstelle 7 innerhalb der im Gesamtnetz vorhandenen Verschlüsselungsgeräte 4 mit einer eineindeutige Zuordnung von Adressen 8 der zweiten Routingebene zu Adressen 8 der ersten Routingebene versehen, so dass eine Wegfindung auch über die Grenze der beiden Netzebenen 2, 3 hinweg möglich ist. Dies ist auch in Fig. 2 verdeutlicht.

Die erste Netzebene 2 ist ein öffentlicher Bereich, wie beispielsweise das Festnetz, oder ein Teil eines weltweit betriebenen Mobilfunk-Netzes, beispielsweise des UMTS - oder GSM-Netzes, und die zweite Netzebene 3 ein vertraulicher Bereich, wie beispielsweise nach außen abgeschirmte Firmennetze oder ähnliches, wobei die jeweiligen Adressen 8 auf den Routingebenen ebenfalls in öffentliche Adressen 8 und in vertrauliche Adressen 8 unterteilt werden.

Im Verschlüsselungsgerät 4 selbst ist während des Netzbetriebs eine aktualisierbare Look-up-Tabelle 6 vorgesehen, die vorkonfiguriert wird. Die Schnittstelle 7 fungiert als kontrollierter Übergang zwischen öffentlicher und vertraulicher Netzebene 2, 3 und somit auch als Grenze zwischen öffentlicher und vertraulicher Routingebene.

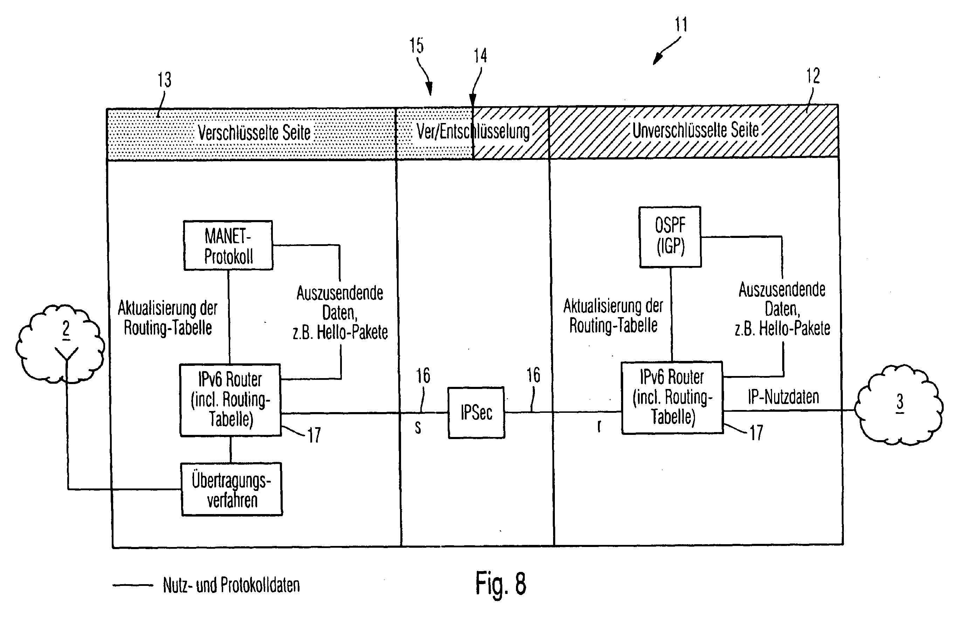

Fig. 8 zeigt ein Ausführungsbeispiel des erfindungsgemäßen Systems 11 für die Adressierung und für das Routing in verschlüsselten Kommunikationsbeziehungen 1 innerhalb eines Gesamtnetzes mit zumindest zwei voneinander getrennten, unterschiedlichen Netzebenen 2, 3. Dabei ist die schwarze Netzebene 2 über zumindest ein Verschlüsselungsgerät 4 gegenüber einer zweiten Netzebenen 3 abgegrenzt. Die Netztopologien beider Netzebenen werden in den getrennten Bereichen 12, 13 des erfindungsgemäßen Systems 11 in den Routingtabellen der Router 17 abgelegt.

Zwischen diesen Bereichen 12, 13 ist eine Protokollinstanz 14 als Zwischenbereich 15 vorgesehen, wobei die Protokollinstanz 14 jeweils einen bidirektionalen Kommunikationsweg 16 zu einem der beiden Bereiche 12, 13 aufweist und beispielsweise gemäß des IPsec Standards implementiert ist. Die erste Netzebene 2 ist innerhalb eines Gesamtnetzes als öffentlicher Bereich 2 definiert und entspricht einem öffentlich zugänglichen Netz 2, wie z.B. ein Festnetz oder ein Mobilfunknetz. Die zweite Netzebene 3 innerhalb eines Gesamtnetzes ist als vertraulicher Bereich vorgesehen und entspricht beispielsweise einem nicht-öffentlichen, abgeschirmten Netz 3, wie z.B. einem Firmennetz oder einem Logistiknetz. Die Adressen in den jeweiligen Netzebenen 2, 3 bzw. den zugehörigen Routingebenen sind als öffentliche Adressen und vertrauliche Adressen 8 voneinander unterscheidbar.

An die Protokollinstanz 14 ist sowohl auf der unverschlüsselten Seite 12 als auch auf der verschlüsselten Seite 13 ein Router 17, im Ausführungsbeispiel gemäß des Ipv6 Standards, angebunden, wobei der Router 17 auch eine Routing-Tabelle umfasst.

Der Router 17 auf der verschlüsselten Seite 12 des erfindungsgemäßen Systems 11 ist über ein definiertes Übertragungsverfahren mit einem öffentlichen Netz 2 verbunden, so dass mit diesem eine Kommunikationsverbindung hergestellt werden kann, da das implementierte Übertragungsverfahren mit dem Übertragungsverfahren des öffentlichen Netzes 2 kompatibel ist.

Ferner ist im Ausführungsbeispiel auf der verschlüsselten Seite 13 ein MANET Protokoll und auf der unverschlüsselten Seite 12 ein IGP Protokoll zur Aktualisierung der zugehörigen Routing-Tabellen 6 implementiert, wobei als IGP ein OSPF Algorithmus vorgesehen ist. Über den Ipv6 Router 17 der unverschlüsselten Seite des erfindungsgemäßen Systems 11 ist eine unverschlüsselte Übertragung von IP-Nutzdaten wie beispielsweise digitalisierte Sprache oder Bilder in ein vertrauliches, nicht-öffentlich zugängliches Netz 3 vorgesehen.

Die Erfindung ist nicht auf das beschriebene Ausführungsbeispiel beschränkt. Alle beschriebenen oder gezeichneten Merkmale sind im Rahmen der Erfindung beliebig miteinander kombinierbar.

## Patentansprüche

1. Verfahren zur Adressierung und zum Routing bei verschlüsselten Kommunikationsbeziehungen (1) in einem Netz in zumindest zwei unterschiedlichen Netzebenen (2, 3), die voneinander getrennt sind mit unterschiedlichen Routingebenen,
wobei jeweils eine erste Netzebene (2) mit der zugehörigen ersten Routingebene über zumindest ein Verschlüsselungsgerät (4) gegenüber einer zweiten Netzebene (3) mit einer zweiten Routingebene abgegrenzt wird,
wobei in den zumindest zwei Routingebenen unabhängig voneinander eine Netztopologie beider Netzebenen (2, 3) ermittelt wird und in jeweiligen Routingtabellen (17) abgespeichert wird, und
wobei eine Schnittstelle (7) in dem zumindest einen Verschlüsselungsgerät (4) mit einer eineindeutigen Zuordnung von Adressen (8) der zweiten Routingebene zu Adressen (8) der ersten Routingebene versehen wird.

2. Verfahren nach Anspruch 1,
**dadurch gekennzeichnet,**
**dass** die erste Netzebene (2) ein öffentlich zugängliches und unsicheres Netz (9) ist.

3. Verfahren nach Anspruch 1 oder 2,
**dadurch gekennzeichnet,**
**dass** die zweite Netzebene (3) ein nicht öffentlich zugängliches Netz für nach außen abgeschirmte vertrauliche Kommunikation ist.

4. Verfahren nach einem der Ansprüche 1 bis 3,
**dadurch gekennzeichnet,**
**dass** die erste Netzebene (2) ein öffentlicher Bereich und die zweite Netzebene (3) ein vertraulicher Bereich ist und die Adressen (8) der ersten Routingebene als öffentliche Adressen und die Adressen (8) der zweiten Routingebene als vertrauliche Adressen kenntlich gemacht werden.

5. Verfahren nach einem der Ansprüche 1 bis 4,
**dadurch gekennzeichnet,**
**dass** die Schnittstelle (7) zwischen einer öffentlichen und einer vertraulichen Netzebene (2, 3) bzw. zwischen einer öffentlichen und einer vertraulichen Routingebene Look-up-Tabellen (6) im Verschlüsselungsgerät (4) vor seiner Inbetriebnahme abgespeichert wird.

6. Verfahren nach Anspruch 5,
**dadurch gekennzeichnet,**
**dass** die Look-up-Tabellen (6) im Verschlüsselungsgerät (4) während eines Netzbetriebs verändert werden.

7. Verfahren nach Anspruch 5 oder 6,
**dadurch gekennzeichnet,**
**dass** eine Aktualisierung einer vertraulichen Routingtabelle mit Hilfe der Look-up-Tabellen (6) im Verschlüsselungsgerät (4) aus lokal vorhandenen, zeitlich veränderlichen Informationen der ersten, öffentlichen Netzebene (2) gewonnen wird.

8. Verfahren nach Anspruch 7,
**dadurch gekennzeichnet,**
**dass** die Abbildungsvorschrift für eine Zuordnung der vertraulichen Adressen (8) zu den öffentlichen Adressen (8) unabhängig von der Einordnung des Verschlüsselungsgeräts (4) in ein Gesamtnetz generiert wird.

9. Verfahren nach einem der Ansprüche 5 bis 7,
**dadurch gekennzeichnet,**
**dass** die Look-up-Tabellen (6) als Realisierung einer Funktion, die eine Beziehung zwischen öffentlichen und vertraulichen Adressen (8) beschreibt, in allen zu benutzenden Verschlüsselungsgeräten (4) vorkonfiguriert werden.

10. Verfahren nach einem der Ansprüche 5 bis 7,
**dadurch gekennzeichnet,**
**dass** die Look-up-Tabellen (6) als Realisierung einer Funktion, die die Beziehung zwischen öffentlichen und vertraulichen Adressen (8) beschreibt, in allen zu benutzenden Verschlüsselungsgeräten (4) während des Netzbetriebs dynamisch aktualisiert werden.

11. Verfahren nach einem der Ansprüche 5 bis 7,
**dadurch gekennzeichnet,**
**dass** die Inhalte der Look-up-Tabellen (6) als Realisierung einer Funktion, die die Beziehung zwischen öffentlichen und vertraulichen Adressen (8) beschreibt, ausschließlich innerhalb des vertraulichen Bereichs (3) verteilt werden.

12. Verfahren nach einem der Ansprüche 5 bis 7 oder 9 bis 11,
**dadurch gekennzeichnet,**
**dass** in den Look-up-Tabellen (6) wahlweise ein zusätzlicher Eintrag erfolgt, der weitere an ein Verschlüsselungsgerät (4) angeschlossene vertrauliche Netze bekannt macht.

13. Verfahren nach Anspruch 7 oder 8,
**dadurch gekennzeichnet,**
**dass** eine Grundlage für die Abbildungsvorschrift eine eindeutige Gerätekennung eines am Netz angebundenen Gerätes ist.

14. Verfahren nach Anspruch 13,
**dadurch gekennzeichnet,**
**dass** die Gerätekennung als MAC-Adresse oder als Host-Ids gemäß Ipv6 Protokoll konzipiert wird.

15. System (11) für die Adressierung und für das Routing in verschlüsselten Kommunikationsbeziehungen (1) innerhalb eines Netzes mit zumindest zwei voneinander getrennten, unterschiedlichen Netzebenen (2, 3) und den zugehörigen Routingebenen,
wobei jeweils eine erste Netzebene (2) mit der zugehörigen ersten Routingebene über zumindest ein Verschlüsselungsgerät (4) gegenüber einer zweiten Netzebene (3) mit einer zweiten Routingebene abgegrenzt ist,
wobei die Netztopologie beider Netzebenen (2, 3) in getrennten Bereichen (12, 13) des Systems (11) abgelegt ist und
wobei ein Zwischenbereich (15) vorgesehen ist, der als Protokollinstanz (14) mit zwei bidirektionalen Kommunikationswegen (16) zwischen den getrennten Bereichen (12, 13) angeordnet ist.

16. System nach Anspruch 15,
**dadurch gekenntzeichnet,**
dass ein öffentlich zugängliches Teil-Netz als erste Netzebene (2) vorgesehen ist und als öffentlicher Bereich definiert ist.

17. System nach Anspruch.15 oder 16,
**dadurch gekennzeichnet,**
**dass** ein nicht öffentliches, abgeschirmtes Teil-Netz als zweite Netzebene (3) vorgesehen ist und als vertraulicher Bereich definiert ist.

18. System nach einem der Ansprüche 15 bis 17,
**dadurch gekennzeichnet,**
**dass** die Adressen (8) der ersten Routingebene als öffentliche Adressen und die Adressen (8) der zweiten Routingebene als vertrauliche Adressen voneinander unterscheidbar sind.

19. System nach einem der Ansprüche 15 bis 18,
**dadurch gekennzeichnet,**
**dass** die Protokollinstanz (14) im Zwischenbereich nach dem |IPsec |standard oder einem anderen Verschlüsselungsverfahren implementiert ist.

20. System nach einem der Ansprüche 15 bis 19,
**dadurch gekennzeichnet,**
**dass** an die Protokollinstanz (14) sowohl auf einer unverschlüsselten Seite in einem ersten Bereich (12) als auch auf einer verschlüsselten Seite in einem zweiten Bereich (13) jeweils ein Router (17) inklusive einer Routingtabelle (17) angebunden ist.

21. System nach einem der Ansprüche 15 bis 20,
**dadurch gekennzeichnet,**
**dass** der Router (17) auf der verschlüsselten Seite (13) über ein definiertes Übertragungsverfahren mit einem öffentlichen Netz (2) eine Kommunikationsverbindung herstellt.

22. System nach Anspruch 21,
**dadurch gekennzeichnet,**
**dass** das Übertragungsverfahren mit einem öffentlichen Netz (2) kompatibel ist.

23. System nach einem der Ansprüche 15 bis 22,
**dadurch gekennzeichnet,**
**dass** auf der verschlüsselten Seite (13) ein MANET Protokoll zur Aktualisierung der zugehörigen Routingtabellen (17) implementiert ist.

24. System nach einem der Ansprüche 15 bis 23,
**dadurch gekennzeichnet,**
**dass** auf der unverschlüsselten Seite (12) ein IGP-Protokoll (Interior Gateway Protocol) implementiert ist.

25. System nach Anspruch 24,
**dadurch gekennzeichnet,**
**dass** ein OSPF (Open Shortest Path First) Algorithmus zur Aktualisierung der zugehörigen Routingtabellen (6) in dem IGP-Protokoll implementiert ist.

26. System nach Anspruch 20,
**dadurch gekennzeichnet,**
**dass** über den Router (17) der unverschlüsselten Seite (12) eine unverschlüsselte Übertragung von Nutzdaten in ein vertrauliches, nicht-öffentlich zugängliches Netz (3) vorgesehen ist.

## Claims

1. Method for addressing and routing in the case of coded communications relationships (1) in at least two different network levels (2, 3) with different routing levels, which are separated from one another within a network,
wherein, in each case, a first network level (2) with the associated first routing level is demarcated from a second network level (3) with a second routing level via at least one coding device (4),
wherein a network topology of both network levels (2, 3) is determined and stored independently from one another in the at least two routing levels in respective routing tables (17), and *(7)*
wherein an interface with an unambiguous allocation of addresses (8) of the second routing level to addresses (8) of the first routing level is provided in the at least one coding device (4).

2. Method according to claim 1,
**characterised in that**
the first network level (2) is a publicly-accessible and non-secure network (9).

3. Method according to claim 1 or 2,
**characterised in that**
the second network level (3) is a non-publicly-accessible network screened from the outside for confidential communication.

4. Method according to any one of claims 1 to 3,
**characterised in that**
the first network level (2) is a public domain, and the second network level (3) is a confidential domain, and the addresses (8) of the first routing level are marked as public addresses, and the addresses (8) of the second routing level are marked as confidential addresses.

5. Method according to any one of claims 1 to 4,
**characterised in that**
the interface (7) between a public and a confidential network level (2, 3) or respectively between a public and a confidential routing level is stored in look-up tables (6) in the coding device (4) before its start-up.

6. Method according to claim 5,
**characterised in that**
the look-up tables (6) in the coding device (4) are amended during a network operation.

7. Method according to claim 5 or 6,
**characterised in that**
an updating of a confidential routing table is obtained from locally-available, time-variable information of the first, public network level (2) using the look-up tables (6) in the coding device (4).

8. Method according to claim 7,
**characterised in that**
the mapping specification for an allocation of the confidential addresses (8) to the public addresses (8) is generated in an overall network independently of the classification of the coding device (4).

9. Method according to any one of claims 5 to 7,
**characterised in that,**
as a realisation of a function which describes the relationship between public and confidential addresses (8), the look-up tables (6) are pre-configured in all coding devices (4) to be used.

10. Method according to any one of claims 5 to 7,
**characterised in that,**
as a realisation of a function which describes the relationship between public and confidential addresses (8), the look-up tables (6) are updated dynamically during network operation in all coding devices (4) to be used.

11. Method according to any one of claims 5 to 7,
**characterised in that,**
as a realisation of a function, which describes the relationship between public and confidential addresses (8), the contents of the look-up tables (6) are distributed exclusively within the confidential domain (3) .

12. Method according to any one of claims 5 to 7 or 9 to 11,
**characterised in that**
an additional entry, which indicates further confidential networks connected to a coding device (4), is optionally implemented in the look-up tables (6).

13. Method according to claim 7 or 8,
**characterised in that**
a basis for the mapping specification is an unambiguous device identifier of a device connected to the network.

14. Method according to claim 13,
**characterised in that**
the device identifier is conceived as a MAC-address or as host-identifiers according to the IPv6 protocol.

15. System (11) for addressing and routing in the case of coded communications relationships (1) within a network with at least two different, mutually-separated network levels (2, 3) and the associated routing levels,
wherein, in each case, a first network level (2) with the associated first routing level is demarcated from a second network level (3) with a second routing level via at least one coding device (4),
wherein the network topology of both network levels (2, 3) is stored in separate domains (12, 13) of the system (11), and
wherein an intermediate domain (15), which is disposed between the separate domains (12, 13) as a protocol instance (14) with two bi-directional communication routes (16), is provided.

16. System according to claim 15,
**characterised in that**
a publicly-accessible, partial network is provided as a first network level (2) and defined as a public domain.

17. System according to claim 15 or 16,
**characterised in that**
a non-public, screened, partial network is provided as the second network level (3) and defined as the confidential domain.

18. System according to any one of claims 15 to 17,
**characterised in that**
the addresses (8) of the first routing level, as public addresses, and the addresses (8) of the second routing level, as confidential addresses, are distinguishable from one another.

19. System according to any one of claims 15 to 18,
**characterised in that**
the protocol instance (14) is implemented in the intermediate domain according to the IPsec standard or another coding method.

20. System according to any one of claims 15 to 19,
**characterised in that**
a router (17) including a routing table (17) is connected respectively to the protocol instance (14) both on an un-coded side in a first domain (12) and also on a coded side in a second domain (13).

21. System according to any one of claims 15 to 20,
**characterised in that**
the router (17) creates a communications connection with a public network (2) on the coded side (13) via a defined transmission method.

22. System according to claim 21,
**characterised in that**
the transmission method is compatible with a public network (2).

23. System according to any one of claims 15 to 22,
**characterised in that**
a MANET protocol is implemented on the coded side (13) in order to update the associated routing tables (17).

24. System according to any one of claims 15 to 23,
**characterised in that**
an interior gateway protocol (IGP) is implemented on the un-coded side (12).

25. System according to claim 24,
**characterised in that**
an open-shortest-path-first (OSPF) algorithm is implemented in the IGP protocol for the updating of the associated routing tables (6).

26. System according to claim 20,
**characterised in that**
an un-coded transmission of payload data into a confidential, non-publicly-accessible network (3) is provided via the router (17) on the un-coded side (12).

## Revendications

1. Procédé d'adressage et de routage avec des liaisons de communication (1) cryptées dans un réseau sur au moins deux plans (2, 3) de réseau différents, séparés l'un de l'autre avec des plans de routage différents,
un premier plan (2) de réseau étant délimité avec le premier plan de routage correspondant par au moins un appareil de cryptage (4) par rapport à un deuxième plan (3) de réseau avec un deuxième plan de routage,
une topologie de réseau des deux plans (2, 3) de réseau étant déterminée dans les deux plans de routage ou plus, indépendamment l'un de l'autre, et mémorisée dans des tableaux de routage (17) respectifs, et
une interface (7) dans l'appareil ou les appareils de cryptage (4) étant pourvue d'une affectation univoque d'adresses (8) du deuxième plan de routage à des adresses (8) du premier plan de routage.

2. Procédé selon la revendication 1,
**caractérisé**
**en ce que** le premier plan (2) de réseau est un réseau (9) publiquement accessible et non sécurisé.

3. Procédé selon la revendication 1 ou la revendication 2,
**caractérisé**
**en ce que** le deuxième plan (3) de réseau est un réseau non publiquement accessible pour une communication confidentielle protégée de l'extérieur.

4. Procédé selon l'une des revendications 1 à 3,
**caractérisé**
**en ce que** le premier plan (2) de réseau est une zone publique et le deuxième plan (3) de réseau une zone confidentielle, et en ce que les adresses (8) du premier plan de routage sont désignées comme adresses publiques et les adresses (8) du deuxième plan de routage comme adresses confidentielles.

5. Procédé selon l'une des revendications 1 à 4,
**caractérisé**
**en ce que** l'interface (7) entre un plan de réseau public et un plan de réseau confidentiel (2, 3) ou entre un plan de routage public et un plan de routage confidentiel est mémorisée dans des tables à consulter (6) de l'appareil de cryptage (4) avant sa mise en service.

6. Procédé selon la revendication 5,
**caractérisé**
**en ce que** les tables à consulter (6) de l'appareil de cryptage (4) sont modifiées en cours d'exploitation du réseau.

7. Procédé selon la revendication 5 ou la revendication 6,
**caractérisé**
**en ce qu'**une mise à jour d'un tableau de routage confidentiel est réalisée à l'aide des tables à consulter (6) de l'appareil de cryptage (4) à partir d'informations localement disponibles, temporellement variables du premier plan (2) de réseau public.

8. Procédé selon la revendication 7,
**caractérisé**
**en ce que** la spécification de représentation pour une affectation des adresses (8) confidentielles aux adresses (8) publiques est générée indépendamment de l'intégration de l'appareil de cryptage (4) dans un réseau global.

9. Procédé selon l'une des revendications 5 à 7,
**caractérisé**
**en ce que** les tables à consulter (6) sont pré-configurées en tant que réalisation d'une fonction décrivant une relation entre adresses (8) publiques et confidentielles dans tous les appareils de cryptage (4) à utiliser.

10. Procédé selon l'une des revendications 5 à 7,
**caractérisé**
**en ce que** les tables à consulter (6) sont mises à jour dynamiquement en cours d'exploitation du réseau, en tant que réalisation d'une fonction décrivant une relation entre adresses (8) publiques et confidentielles dans tous les appareils de cryptage (4) à utiliser.

11. Procédé selon l'une des revendications 5 à 7,
**caractérisé**
**en ce que** les contenus des tables à consulter (6) sont répartis exclusivement à l'intérieur de la zone (3) confidentielle, en tant que réalisation d'une fonction décrivant une relation entre adresses (8) publiques et confidentielles.

12. Procédé selon l'une des revendications 5 à 7 ou 9 à 11,
**caractérisé**
**en ce qu'**il est procédé en option à une entrée supplémentaire dans les tables à consulter (6), laquelle fait connaître d'autres réseaux confidentiels raccordés à un appareil de cryptage (4).

13. Procédé selon la revendication 7 ou la revendication 8,
**caractérisé**
**en ce qu'**une base pour la spécification de représentation est une identification univoque d'appareil pour un appareil relié au réseau est.

14. Procédé selon la revendication 13,
**caractérisé**
**en ce que** l'identification d'appareil est conçue en tant qu'adresse MAC ou en tant qu'identificateur d'hôte conformément au protocole IPv6.

15. Système (11) pour l'adressage et pour le routage dans des liaisons de communication (1) cryptées à l'intérieur d'un réseau avec au moins deux plans (2, 3) de réseau différents, séparés l'un de l'autre et les plans de routage correspondants,
un premier plan (2) de réseau avec le premier plan de routage correspondant étant délimité par au moins un appareil de cryptage (4) par rapport à un deuxième plan (3) de réseau avec un deuxième plan de routage,
la topologie de réseau des deux plans (2, 3) de réseau étant archivée dans des zones (12, 13) séparées du système (11) et
une zone intermédiaire (15) étant prévue, laquelle est disposée comme instance de protocole (14) avec deux chemins de communication (16) entre les zones (12, 13) séparées.

16. Système selon la revendication 15,
**caractérisé**
**en ce qu'**un réseau partiel publiquement accessible est prévu comme premier plan (2) de réseau et est défini comme zone publique.

17. Système selon la revendication 15 ou la revendication 16,
**caractérisé**
**en ce qu'**un réseau partiel protégé non public est prévu comme deuxième plan (3) de réseau et est défini comme zone confidentielle.

18. Système selon l'une des revendications 15 à 17,
**caractérisé**
**en ce que** les adresses (8) du premier plan de routage et les adresses (8) du deuxième plan de routage sont distinguables entre elles, respectivement en tant qu'adresse publiques et en tant qu'adresses confidentielles.

19. Système selon l'une des revendications 15 à 18,
**caractérisé**
**en ce que** l'instance de protocole (14) est implémentée dans la zone intermédiaire conformément au standard IPsec ou à un autre procédé de cryptage.

20. Système selon l'une des revendications 15 à 19,
**caractérisé**
**en ce qu'**un routeur (17) est raccordé, tableau de routage (17) inclus, à l'instance de protocole (14) sur un côté non crypté dans une première zone (12) ainsi que sur un côté crypté dans une deuxième zone (13).

21. Système selon l'une des revendications 15 à 20,
**caractérisé**
**en ce que** le routeur (17) établit au moyen d'un procédé de communication défini une liaison de communication avec un réseau public (2) sur le côté crypté (13).

22. Système selon la revendication 21,
**caractérisé**
**en ce que** le procédé de transmission est compatible avec un réseau public (2).

23. Système selon l'une des revendications 15 à 22,
**caractérisé**
**en ce qu'**un protocole MANET pour la mise à jour des tableaux de routage (17) correspondants est implémenté sur le côté crypté (13).

24. Système selon l'une des revendications 15 à 23,
**caractérisé**
**en ce qu'**un protocole IGP (Interior Gateway Protocol) est implémenté sur le côté non crypté (12).

25. Système selon la revendication 24,
**caractérisé**
**en ce qu'**un algorithme OSPF (Open Shortest Path First) pour la mise à jour des tableaux de routage (6) correspondants est implémenté dans le protocole IGP.

26. Système selon la revendication 20,
**caractérisé**
**en ce que** par l'intermédiaire du routeur (17) du côté non crypté (12), une transmission non cryptée de données utiles est prévue dans un réseau (3) confidentiel, non publiquement accessible.
